(19) Europäisches Patentamt / European Patent Office / Office européen des brevets

(11) **EP 2 952 925 A1**

(12) **EUROPEAN PATENT APPLICATION**

(43) Date of publication:
09.12.2015 Bulletin 2015/50

(51) Int Cl.:
*G01S 5/02* (2010.01)  *G01S 5/14* (2006.01)
*G01S 11/06* (2006.01)  *G01S 11/08* (2006.01)

(21) Application number: 14171612.6

(22) Date of filing: 06.06.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: **Technische Universität Graz**
**8010 Graz (AT)**

(72) Inventors:
• **Meissner, Paul**
**8073 Feldkirchen (AT)**
• **Witrisal, Klaus**
**8042 Graz (AT)**

• **Leitinger, Erik**
**8020 Graz (AT)**
• **Lafer, Manuel**
**8312 Ottendorf an der Rittschein (AT)**

(74) Representative: **Dilg, Haeusler, Schindelmann**
**Patentanwaltsgesellschaft mbH**
**Leonrodstrasse 58**
**80636 München (DE)**

Remarks:
Amended claims in accordance with Rule 137(2) EPC.

(54) **Method, device and system for indoor localization and tracking using ultra-wideband radio signals**

(57) A method of determining a position of a mobile agent in an indoor environment is provided, wherein one or more fixed anchors are arranged at predetermined positions within the indoor environment. The method comprises (a) transmitting an RF signal from a fixed anchor to the mobile agent or from the mobile agent to the fixed anchor, (b) receiving the RF signal transmitted by the fixed anchor at the mobile agent or the RF signal transmitted by the mobile agent at the fixed anchor, (c) based on the received RF signal, estimating a plurality of path lengths corresponding to the lengths of a plurality of paths along which the RF signal has traveled between the fixed anchor and the mobile agent, (d) obtaining an uncertainty for each of the estimated path lengths, (e) generating a set of weighted path lengths based on the estimated path lengths and the corresponding uncertainties for each of the estimated path lengths, and (f) determining the position of the mobile agent based on the weighted path lengths and a set of data representative of a relation between positions within the indoor environment and path lengths. Further, there is provided a mobile agent, an indoor localization system, a computer program, and a computer program product.

Fig. 1

**Description**

Field of Invention

The present invention relates to the field of indoor localization and tracking, in particular to a method, device and system for indoor localization and tracking using ultra-wideband radio signals.

Art Background

Indoor localization systems face many difficulties when they are to be deployed in practice. Optical systems might become unusable in emergency situations due to fire and smoke; signal strength based systems are sensitive to fading effects; fingerprinting systems need dedicated training phases; etc. Range-measurement-based systems using radio signals offer advantages like the capability of being integrated in existing radio devices such as smartphones, the potential of low-power implementations and moderate infrastructure requirements. However, these systems face challenging performance impairments caused by propagation effects like strong reflections or diffuse scattering.

To counter these impairments, a large signal bandwidth has shown to be beneficial for two main reasons: Firstly, the temporal resolution - and therefore the attainable accuracy - is increased. Secondly, the line-of-sight (LOS) path can easier be separated from other signal parts, which improves the robustness, i.e. the percentage of cases in which the attainable accuracy can be achieved. For these reasons, systems using ultra-wideband (UWB) signals are considered promising candidates for both accurate and robust indoor localization systems.

Most existing indoor localization systems based on radio signals are based on methods to extract parameters such as path length or angle of arrival from the radio signals. In most of these methods, multipath components (i.e. components that arrive after the direct path, caused by reflection, scattering, etc.) are treated as the major source of errors, as they lead to errors in the path parameter estimation. Accordingly, these systems aim at determining the direct path between the tracking object (often referred to as mobile agent) and the base stations (often referred to as anchors) and filtering out the multipath components caused by reflections within the environment. However, these systems may need expensive processing to deal with the multipath components and are furthermore very sensitive to situations where no direct path (LOS) between anchor(s) and agent is/are present. Thus, significant computational power and a high number of anchors may be necessary to provide a reliable system.

On the other hand, a fundamentally different indoor tracking approach that can actually make use of multipath components has e.g. been described in the publications

(1) K. Witrisal and P. Meissner, "Performance Bounds for Multipath-aided Indoor Navigation and Tracking (MINT)," in International Conference on Communications (ICC), Ottawa, Canada, 2012,

(2) P. Meissner, E. Leitinger, M. Froehle, and K. Witrisal, "Accurate and Robust Indoor Localization Systems Using Ultra-wideband Signals," in European Navigation Conference (ENC), Vienna, Austria, 2013 (http://arxiv.org/abs/1304.7928),

(3) P. Meissner and K. Witrisal, "Analysis of Position-Related Information in Measured UWB Indoor Channels," in 6th European Conference on Antennas and Propagation (EuCAP), Prague, Czech Repuplic, 2012,

(4) P. Meissner, E. Leitinger, M. Lafer, and K. Witrisal, "Real-Time Demonstration System for Multipath-Assisted Indoor Navigation and Tracking (MINT)," in IEEE ICC 2014 Workshop on Advances in Network Localization and Navigation (ANLN), 2014,

(5) K.Witrisal, E. Leitinger, P. Meissner and D. Arnitz, "Cognitive Radar for the Localization of RFID Transponders in Dense Multipath Environments," in IEEE Radar Conference, Ottawa, Canada, April 2013, and

(6) E. Leitinger, M. Froehle, P. Meissner and K. Witrisal, "Multipath-Assisted Maximum-Likelihood Indoor Positioning using UWB Signals," in IEEE ICC 2014 Workshop on Advances in Network Localization and Navigation (ANLN), June 10-14, 2014. (to appear)

This approach relies on a floor plan representing the geometry of the indoor environment. The multipath components are modeled by generating a set of virtual anchors corresponding to reflecting surfaces within the environment. By fitting the measured path lengths (or transit times) to the combination of anchors (real and virtual anchors) that are visible at a given position by means of statistical processing, the position of a moving mobile agent (object) within the indoor environment can be tracked.

Although the above approach has shown good results, there may still be a need for improvement of the localization precision and robustness.

Summary of the Invention

This need may be met by the subject matter according to the independent claims. Advantageous embodiments of the present invention are described by the dependent claims.

According to a first aspect of the invention, there is provided a method of determining a position of a mobile agent in an indoor environment, wherein one or more fixed anchors are arranged at predetermined positions within the indoor environment. The method comprises (a) transmitting an RF signal from a fixed anchor to the mobile agent or from the mobile agent to the fixed anchor, (b) receiving the RF signal transmitted by the fixed anchor at the mobile agent or the RF signal transmitted by the mobile agent at the fixed anchor, (c) based on the received RF signal, estimating a plurality of path lengths corresponding to the lengths of a plurality of paths along which the RF signal has traveled between the fixed anchor and the mobile agent, (d) obtaining an uncertainty for each of the estimated path lengths, (e) generating a set of weighted path lengths based on the estimated path lengths and the corresponding uncertainties for each of the estimated path lengths, and (f) determining the position of the mobile agent based on the weighted path lengths and a set of data representative of a relation between positions within the indoor environment and path lengths.

This aspect of the invention is based on the idea that each estimated path length between the fixed anchor(s) and the mobile agent is weighted in accordance with an uncertainty of the estimated path length before the position of the mobile agent is determined based on the weighted path lengths and a set of data that is representative of a relation between positions within the indoor environment and path lengths. Thereby, when determining the position of the mobile agent, the estimated path lengths having higher uncertainties are weighted differently than the estimated path lengths having lower uncertainties. By taking each estimated path length into account in accordance with its individual uncertainty, highly uncertain estimates may be relied less upon than estimates with low uncertainty. Thereby, a significant improvement in precision and robustness is obtained, in particular in comparison to known approaches which weight estimated path lengths by applying heuristic weights, which do not represent a true uncertainty of the individual path lengths.

In the present context, the term "mobile agent" may in particular denote a mobile or portable electronic device, such as a mobile phone, navigation device, etc. capable of transmitting and/or receiving RF signals, such as UWB radio signals.

In the present context, the term "fixed anchor" may in particular denote a stationary electronic device, such as a base station, capable of transmitting and/or receiving RF signals, such as UWB radio signals.

In the present context, the term "indoor environment" may in particular denote the interior of a building, such as an office building, a factory, a hospital, a parking house etc.

In the present context, the term "a set of data representative of a relation between positions within the indoor environment and path lengths" may in particular denote a set of data comprising a representation of the geometry of the indoor environment and the positions of fixed anchors and virtual anchors, wherein the virtual anchors correspond to reflected signals from the fixed anchors or other virtual anchors.

In the present context, the term "uncertainty" may in particular denote a statistical measure indicative of an expected precision or variation of an estimated path length.

According to this aspect of the invention, RF signals are transmitted between the mobile agent and at least one fixed anchor. More specifically, the signal transmission may take place from the fixed anchor(s) to the mobile agent or from the mobile agent to the fixed anchor(s). In case more fixed anchors are involved, the transmissions between each of the fixed anchors and the mobile agent may be isolated in any known manner, e.g. by code or time division. Whether the transmission takes place in the one or the other direction, the received RF signal(s) is/are analyzed and for each pair of mobile agent and fixed anchor, a plurality of path lengths is estimated. The path lengths may correspond to a direct path between mobile agent and fixed anchor (in case a line of sight exists) and a number of so-called multipaths, i.e. non-direct paths between mobile agent and fixed anchor involving at least one reflection from a surface within the indoor environment, such as a wall, window or other object. For each of the estimated path lengths, a corresponding uncertainty is applied to produce a corresponding weighted path length. Finally, the weighted path lengths are used to determine the position of the mobile agent.

According to an embodiment of the invention, the step of obtaining the uncertainty for each of the estimated path lengths comprises estimating an uncertainty for each of the estimated path lengths based on a pre-stored set of uncertainty data.

In this embodiment, a pre-stored set of uncertainty data is used to estimate an uncertainty for each estimated path length. More specifically, the pre-stored set of uncertainty data may comprise uncertainties corresponding to a subset of all possible path lengths which allows estimation of an uncertainty for any given path length.

In other words, the uncertainties are derived from pre-stored data corresponding to the particular indoor environment.

According to a further embodiment of the invention, the pre-stored set of uncertainty data is obtained by measuring a set of uncertainties at a plurality of predetermined positions within the indoor environment.

In this embodiment, the pre-stored set of uncertainty data is obtained during set up or installation of the system by measuring uncertainties at a number of predetermined positions within the indoor environment.

More specifically, the mobile agent is arranged at each of the predetermined positions and a number of path length estimations are performed. The results are analyzed to obtain the corresponding uncertainty, e.g. in terms of a standard deviation, which are then stored.

In this and in the preceding embodiment, the uncertainties are obtained from offline data, i.e. pre-stored data.

According to a further embodiment of the invention, the step of obtaining the uncertainty for each of the estimated path lengths comprises estimating an uncertainty for each of the estimated path lengths based on the received RF signal.

In this embodiment, the uncertainties are estimated based on analysis of the received RF signal(s), i.e. based on online data. Thereby, changes in the indoor environment can be taken into account and an even better precision and robustness can be obtained.

It should be noted, that this embodiment may advantageously be combined with one of the preceding embodiments, such that an initial (offline) pre-stored set of uncertainty data is used to begin with and then modified or updated online during use.

According to a further embodiment of the invention, the step of generating the set of weighted path lengths comprises weighting each estimated path length with a weighting factor which is related to the uncertainty for the estimated path length.

In this embodiment, a larger weighting factor may be applied to estimated path lengths with lower uncertainties while a smaller weighting factor may be applied to estimated path lengths with higher uncertainties.

Thereby, the estimated path lengths having relatively low uncertainty are taken more into account when determining the position of the mobile agent.

According to a further embodiment of the invention, the step of determining the position of the device comprises applying a Bayesian tracking algorithm, in particular an extended Kalman filter algorithm, to the weighted path lengths.

By feeding the weighted path lengths to the Bayesian tracking algorithm, a very precise and robust tracking of the mobile agent may be provided.

According to a further embodiment of the invention, the step of estimating the plurality of path lengths comprises applying an estimation algorithm, in particular a maximum-likelihood estimation algorithm, to the received RF signal.

Thereby, the peaks in the RF signal corresponding to the various path lengths can be obtained with high precision. According to a second aspect of the invention, there is provided a mobile agent capable of determining its position in an indoor environment, wherein one or more fixed anchors are arranged at predetermined positions within the indoor environment. The mobile agent comprises (a) a unit for receiving an RF signal transmitted by one of the transmitters, (b) a unit for, based on the received RF signal, estimating a plurality of path lengths corresponding to the lengths of a plurality of paths along which the RF signal has traveled from the transmitter to the receiver, (c) a unit for obtaining an uncertainty for each of the estimated path lengths, (d) a unit for generating a set of weighted path lengths based on the estimated path lengths and the corresponding uncertainties for each of the estimated path lengths, and (e) a unit for determining the position of the mobile agent based on the weighted path lengths and a set of data representative of a relation between positions within the indoor environment and weighted path lengths.

The mobile agent according to this aspect of the invention is essentially based on the same idea as the first aspect and the embodiments described above. In other words, the mobile agent is capable of implementing the method according to the first aspect in an indoor localization system in which one or more fixed anchors transmit UWB radio signals. The mobile agent is capable of receiving the radio signals and of estimating a plurality of corresponding path lengths. Further, the mobile agent is capable of generating a set of weighted path lengths based on uncertainties for the estimated path lengths and determining the position of the mobile agent based on the weighted path lengths.

More specifically, the mobile agent may be a specifically designed hardware device in which the various units are implemented as functional units in form of hardware and/or software. The mobile agent may also be implemented as software in a portable consumer device, such as a smartphone or a tablet.

The mobile unit preferably comprises a display unit and/or an audio interface, e.g. a loudspeaker, for providing a user with visual, audible or audiovisual position and navigation information.

According to a third aspect of the invention, there is provided an indoor localization system. The system comprises (a) one or more fixed anchors arranged at predetermined positions within an indoor environment, (b) a mobile agent adapted to receive an RF signal transmitted by one of the fixed anchors or to transmit an RF signal to one of the fixed anchors, (c) wherein the one or more fixed anchors are adapted to transmit an RF signal to the mobile agent or to receive an RF signal from the mobile agent, (d) an estimating unit for, based on the received RF signal, estimating a plurality of path lengths corresponding to the lengths of a plurality of paths along which the RF signal has traveled between the fixed anchor and the mobile agent, (e) an obtaining unit for obtaining an uncertainty for each of the estimated path lengths, (f) a generating unit for generating a set of weighted path lengths based on the estimated path lengths and the corresponding uncertainties for each of the estimated path lengths, and (g) a determining unit for determining the position of the mobile agent based on the weighted path lengths and a set of data representative of a relation between positions within the indoor environment and weighted path lengths.

The indoor localization system according to this aspect of the invention is essentially based on the same idea as the first and second aspects and the embodiments described above. That is, the system consists of one or more fixed anchors, a mobile agent and a collection of functional units. Each functional unit may be implemented in a fixed anchor, in the mobile agent or in or as a further device within the system. In other words, the functionality needed to implement the method according to the first aspect or the above embodiments may be contained in the anchors and/or in the mobile agent and/or in further devices within the system.

Based on RF transmission(s) between the anchor(s) and the mobile agent, the estimating unit estimates a plurality of path lengths. The obtaining unit obtains an uncertainty for each estimated path length and the generating unit uses the uncertainties to generate a weighted set of path lengths. Finally, the determining unit determines the position of the mobile agent based on the weighted path lengths and a set of data representative of a relation between positions within the indoor environment and weighted path lengths.

According to an embodiment of the invention, the mobile agent comprises the estimating unit, the obtaining unit, the generating unit, and the determining unit.

In this embodiment, the localization functionality according to the first aspect is contained within the mobile agent. In other words, the mobile agent of the system according to this embodiment corresponds to the mobile agent according to the above described second aspect of the invention.

According to a further embodiment of the invention, the system further comprises a server, wherein the server, the at least one fixed anchor and the mobile agent are adapted to be in data communication, and wherein the server comprises at least one of the estimating unit, the obtaining unit, the generating unit, and the determining unit, while the mobile agent comprises those of the estimating unit, the obtaining unit, the generating unit, and the determining unit that are not comprised by the server.

In this embodiment, at least some of the localization functionality is distributed to the server of the system while the remaining localization functionality is contained in the mobile agent.

The server may be a standalone device with processor and memory adapted to run a server application. Alternatively, the server may be implemented as a server application running on one or more of the fixed anchors.

According to a fourth aspect of the invention, there is provided a computer program comprising computer executable instructions which, when executed by a computer, causes the computer to perform the method according to the first aspect or one of the above embodiments.

The computer program may in particular be designed to be run on a portable computing device, such as a smart phone or tablet. Thereby, the standard hardware of the portable computing device is controlled by the computer program to perform the localization based on RF communication with the fixed anchor(s).

According to a fifth aspect of the invention there is provided a computer program product comprising a computer readable data carrier loaded with the program according to the fourth aspect.

With regard to the present invention and its various aspects and embodiments as discussed above, it is noted that in any statistical estimation method, knowledge of the uncertainties of the input parameters allows for an efficient (optimal, in the sense of using available information) use of the measurement data. In publication (2), the path length uncertainties were heuristically chosen and based on simplistic assumptions on the expected uncertainties. Also, the uncertainty was chosen globally, i.e. the same uncertainty value was used for every multipath component.

In the framework of the present invention, these uncertainties are used in a tracking algorithm to weight the individual path lengths optimally. Furthermore, the uncertainties are estimated automatically based on pre-stored data and/or actual signals. The present invention can be used with any statistical (Bayesian) tracking method. In a preferred implementation, an Extended Kalman filter is used to show the excellent results that can be obtained.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

Brief Description of the Drawing

Figure 1 shows localization within an indoor environment in accordance with an embodiment of the present invention.

Figure 2 shows a performance comparison between localization in accordance with an embodiment of the present invention and a prior art localization approach.

Figure 3 shows a further performance comparison between localization in accordance with an embodiment of the present invention and a prior art localization approach.

Detailed Description

The illustration in the drawing is schematic. It is noted that in different figures, similar or identical elements are provided with the same reference numerals or with reference numerals which differ only within the first digit.

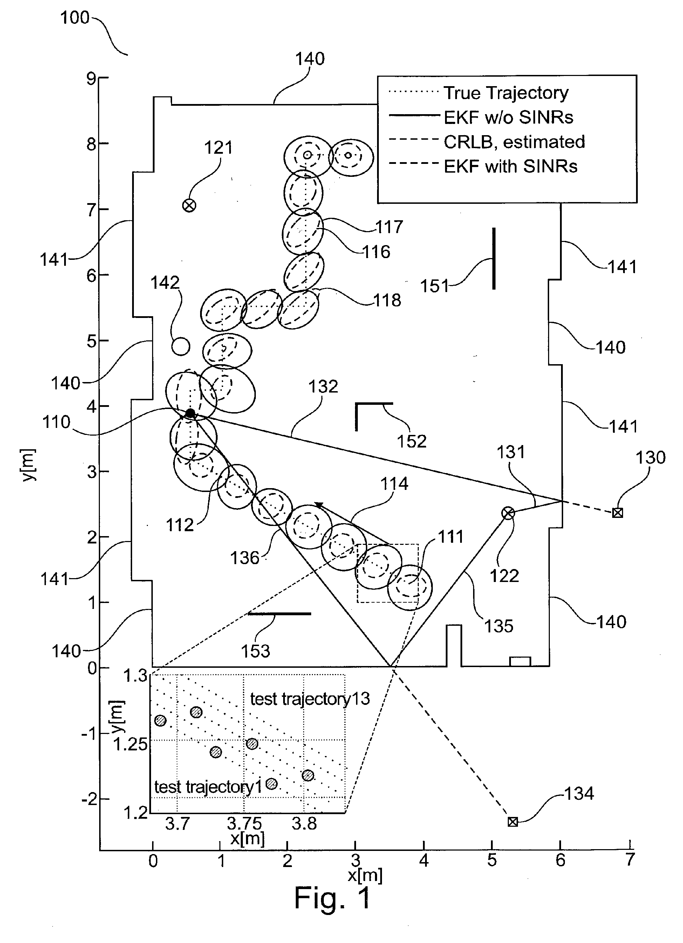

Figure 1 shows localization within an indoor environment 100 in accordance with an embodiment of the present invention. More specifically, figure 1 shows tracking of a mobile agent 110 moving from starting point 111 along trajectory 112 in the direction indicated by arrow 114. Two fixed anchors 121 and 122 are shown in the indoor environment 100. The tracking takes place within a room delimited by walls 140 of various materials and windows 141. Furthermore, 1 pillar 142 is arranged within the room. The UWB signals transmitted from the fixed anchors 121 and 122 are reflected by the walls 140, the windows 141 and the pillar, such that multipath components occur. For example, figure 1 shows two (first order, i.e. one single reflection) multipath components between the fixed anchor 122 and the mobile agent 110. One multipath is caused by reflection from a window 141 and consists of the two components 131 (anchor 122 to window 141) and 132 (window 141 to mobile agent 110). This transmission path is represented by a first virtual anchor 130. Similarly, figure 1 shows a multipath caused by reflection from a wall 140. This multipath consists of the two components 135 (fixed anchor 122 to wall 140) and 136 (wall 140 to mobile agent 110). Similarly, this transmission path is represented by a second virtual anchor 134. Furthermore, figure 1 illustrates three measurement locations 151, 152, 153 for estimation of path length uncertainties. Each of the three measurement locations 151, 152, 153 consists of 20 measurement points. For every 12th position along the trajectory 112, 20-fold standard deviation ellipses 116 and 117 are shown for tracking by means of an extended Kalman filter (EKF) respectively with and without weighted path lengths based on path length uncertainties. Furthermore, 20-fold CRLB 118 are also provided. Finally, the lower left part of figure 1 shows a close-up of the starting area of the trajectories, illustrating a 1 cm spaced grid, out of which 25 5 cm spaced trajectories are obtained.
With further reference to figure 1, the concept and functionality of the present invention will be discussed in further detail in the following.

INTRODUCTION

Robustness and accuracy are key requirements of indoor localization systems. We define robustness as the percentage of cases in which a system can achieve its given potential accuracy. Due to their fine time resolution, range-based ultra-wideband (UWB) systems provide accurate distance estimates between anchors and the agent to be localized (D. Dardari, A. Conti, U. Ferner, A. Giorgetti, and M. Z. Win, "Ranging With Ultrawide Bandwidth Signals in Multipath Environments," Proceedings of the IEEE, 2009). However, a non-line-of-sight (NLOS) situation can decrease the robustness due to biased range estimates. The inventors have proposed an approach called multipath-assisted indoor navigation and tracking (MINT) to enhance the robustness (cf. publication (1) and publication (2) referenced in the introduction). It makes use of the floor plan to associate multipath components (MPCs) to the surrounding geometry.
The present invention shows how position-related information can be used efficiently as additional prior information. Channel parameters describing the reliability of the reflected MPCs are estimated from a few training signals with an agent at known positions (cf. publication (2) and publication (3) referenced in the introduction) and used in the tracking filter as measurement noise model. Taking into account diffuse multipath (DM) allows for much more realistic performance indications (see N. Decarli, F. Guidi, and D. Dardari, "A Novel Joint RFID and Radar Sensor Network for Passive Localization: Design and Performance Bounds," IEEE Journal of Selected Topics in Signal Processing, 2014, and P. Meissner, E. Leitinger, M. Lafer, and K. Witrisal, "Real-Time Demonstration System for Multipath-Assisted Indoor Navigation and Tracking (MINT)," in IEEE ICC 2014 Workshop on Advances in Network Localization and Navigation (ANLN), Sydney, Australia, 2014), especially in dense multipath environments. For a navigating agent, awareness to the uncertainty of the available information is crucial for the tracking performance both in theoretic (Y. Shen, S. Mazuelas, and M. Win, "Network Navigation: Theory and Interpretation," IEEE Journal on Selected Areas in Communications, 2012) and in practical settings (A. Conti, D. Dardari, M. Guerra, L. Mucchi, and M. Win, "Experimental Characterization of Diversity Navigation," IEEE Systems Journal, 2014, and publications (5) and (6)), especially in dense multipath environments.

The main contributions of the present invention are:

(1) It is shown that a multipath-assisted tracking approach can be made aware of the relevance of specific deterministic MPCs in an environment.

(2) Using measurements, it is shown that centimeter-level accuracy can be achieved robustly also in NLOS conditions.

Notation: The symbols *, $(\cdot)^T$, $(\cdot)^*$, $\mathbb{E}\{\cdot\}$, and IN denote convolution, transposition, conjugation, expectation, and an identity matrix of dimension $N$, respectively.

TRACKING AND CHANNEL ESTIMATION

*Signal and Geometry Models*

We aim at tracking a mobile agent 110 in an environment with J anchors 121, 122 at known positions. The signal between the j-th anchor and the agent at the position $\mathbf{p}_\ell$ is modeled as in publication (1):

$$r_\ell^{(j)}(t) = \sum_{k=1}^{K_\ell^{(j)}} \alpha_{k,\ell}^{(j)} s(t - \tau_{k,\ell}^{(j)}) + s(t) * \nu_\ell^{(j)}(t) + w(t). \tag{1}$$

The sets $\left\{\alpha_{k,\ell}^{(j)}\right\}$ and $\left\{\tau_{k,\ell}^{(j)}\right\}$ are the complex amplitudes and delays of the $k$-th deterministic MPC, respectively. The signal s(t) denotes the transmitted pulse shape with effective pulse duration $T_p$. The random process $\nu_\ell^{(j)}$ denotes DM and is modeled as a Gaussian process with auto-covariance

$$\mathbb{E}\{\nu_\ell^{(j)}(\tau)[\nu_\ell^{(j)}(u)]^*\} = S_{\nu,\ell}^{(j)}(\tau)\delta(\tau - u),$$

where $S_{\nu,\ell}^{(j)}(\tau)$ is the power delay profile (PDP) of the DM. The signal $w(t)$ denotes white Gaussian measurement noise with double-sided power spectral density (PSD) of $N_0/2$.

The delays of the $K_\ell^{(j)}$ deterministic MPCs are modeled geometrically using mirror images of the j-th anchor with respect to the corresponding walls, introducing so-called virtual anchors (VAs) (as described e.g. in publication (2) and in J. Kunisch and J. Pamp, "An ultra-wideband space-variant multipath indoor radio channel model," in IEEE Conference on Ultra Wideband Systems and Technologies, 2003). Fig. 1 shows two examples of such VAs, i.e 130 and 134. It can be seen that the distance from the agent's position $\mathbf{p}_\ell$ to the $k$-th VA at $\mathbf{a}_k^{(j)}$ corresponds to the delay

$$\tau_{k,\ell}^{(j)} = \tfrac{1}{c}d_{k,\ell}^{(j)} = \tfrac{1}{c}\|\mathbf{p}_\ell - \mathbf{a}_k^{(j)}\|$$

of the corresponding MPC, where c denotes the speed of light. For the whole scenario, a set $\mathcal{A}^{(j)}$ of all potential VAs of the j-th anchor can be constructed. Higher-order VAs are obtained by mirroring again lower-order VAs with respect to reflectors. Using optical ray-tracing, the set of visible VAs can be computed for position $\mathbf{p}_\ell$ as

$$\mathcal{A}_\ell^{(j)} = \{\mathbf{a}_{\ell,1}^{(j)}, \ldots, \mathbf{a}_{\ell,K_\ell^{(j)}}^{(j)}\} = \{\mathbf{a}_i^{(j)} : f_{\text{vis}}(\mathbf{a}_i^{(j)}, \mathbf{p}_\ell) = 1\} \tag{2}$$

where the ray-tracing is expressed by the function

$$f_{\text{vis}}(\mathbf{a}_i^{(j)}, \mathbf{p}) = \begin{cases} 1, & \text{if VA } \mathbf{a}_i^{(j)} \text{ is visible at } \mathbf{p} \\ 0, & \text{else.} \end{cases} \tag{3}$$

*Tracking Algorithm*

In a first step, the location-dependent parameters, i.e. the arrival times of the deterministic MPCs, are estimated from the received signal (at the mobile agent 110) modeled by (1). The arrival time estimation at positions $\ell$ is realized as an iterative least-squares approximation of the received signal

$$\hat{\tau}_{k,\ell}^{(j)} = \arg\min_\tau \int_0^T \left| r_\ell^{(j)}(t) - \hat{r}_{\ell,k-1}^{(j)}(t) - \hat{\alpha}(\tau)s(t-\tau) \right|^2 dt \tag{4}$$

using a template signal

$$\hat{r}_{\ell,k}^{(j)}(t) = \sum_{k'=1}^{k} \hat{\alpha}_{k',\ell}^{(j)} s(t - \hat{\tau}_{k',\ell}^{(j)}) $$

for all MPCs up to the *k*-th. The path amplitudes are nuisance parameters, estimated using a projection of $r_\ell^{(j)}(t)$ onto a unit energy pulse *s(t)* as

$$\hat{\alpha}(\tau) = \int_0^T [r_\ell^{(j)}(t)]^* s(t-\tau)dt; \quad \hat{\alpha}_{k,\ell}^{(j)} = \hat{\alpha}(\hat{\tau}_{k,\ell}^{(j)}). \tag{5}$$

The number of estimated MPCs $\widehat{R}_\ell^{(j)}$ should be chosen according to the number of expected specular paths in an environment. With the assumption of separable MPCs and white noise, (4) and (5) corresponds to a maximum-likelihood (ML) estimation of the deterministic MPCs.

The tracking is done as in publication (2) using an EKF with data association (DA), which is necessary since the estimated MPC arrival times in (4) are not associated to the VAs. We choose a simple linear Gaussian constant-velocity motion model:

$$\mathbf{x}_{\ell+1} = \mathbf{F}\mathbf{x}_{\ell} + \mathbf{G}\mathbf{n}_{a,\ell} \quad (6)$$

$$= \begin{bmatrix} 1 & 0 & \Delta T & 0 \\ 0 & 1 & 0 & \Delta T \\ 0 & 0 & 1 & 0 \\ 0 & 0 & 0 & 1 \end{bmatrix} \mathbf{x}_{\ell} + \begin{bmatrix} \frac{\Delta T^2}{2} & 0 \\ 0 & \frac{\Delta T^2}{2} \\ \Delta T & 0 \\ 0 & \Delta T \end{bmatrix} \mathbf{n}_{a,\ell}.$$

The state vector $\mathbf{x}_{\ell}$ of the agent contains position $\mathbf{p}_{\ell}$ and the velocity vector, and $\Delta T$ is the update rate. The driving acceleration noise term $\mathbf{n}_{a,\ell}$ with zero mean and covariance matrix $Q = \sigma_a^2 GG^T$ models motion changes that deviate from the constant-velocity assumption.

For the measurement update of the EKF, the set of expected VAs is calculated for the DA at the predicted position $\bar{p}_{\ell}$ using (2) for each anchor, yielding a set $\overline{\mathcal{A}}_{\ell}^{(j)}$. At this time, prior information such as a set $\tilde{\mathcal{A}}^{(j)}$ defining relevant VAs can be used to restrict the set of expected VAs, resulting in

$$\overline{\mathcal{A}}_{\ell}^{(j)} \cap \tilde{\mathcal{A}}^{(j)}.$$

The corresponding expected path delays are then matched to the estimated arrival times (4) such that the cumulative distance of estimated and expected delays is minimized, yielding the set of associated VAs $\mathcal{A}_{\ell,ass}$. The association is done using a constrained optimal subpattern assignment approach (see publication (2) and D. Schuhmacher, B.-T. Vo, and B.-N. Vo, "A Consistent Metric for Performance Evaluation of Multi-Object Filters," IEEE Transactions on Signal Processing, 2008), where the constraint is that associations at a distance larger than a given maximum ranging uncertainty, the so-called cut-off distance $d_c$, are discarded.

After joining information from all anchors,

$$\mathcal{A}_{\ell,ass} = \bigcup_j \mathcal{A}_{\ell,ass}^{(j)},$$

the corresponding distance estimates are stacked in the EKF's measurement input vector which is modeled as

$$\mathbf{z}_{\ell} = \left[ \dots, \|\mathbf{a}_k^{(j)} - \mathbf{p}_{\ell}\|, \dots \right]^T + \mathbf{n}_{z,\ell}, \quad \mathbf{a}_k^{(j)} \in \mathcal{A}_{\ell,ass}. \quad (7)$$

The measurement noise $\mathbf{n}_{z,\ell}$ is assumed to be zero-mean multivariate Gaussian. The choice of the measurement noise covariance matrix $\mathbf{R}_{\ell}$ depends on the amount of prior information. If a-priori estimates of the range estimation uncertainties var $\left\{ \hat{d}_{k,\ell}^{(j)} \right\}$ are available for a set of VAs, then

$$\mathbf{R}_{\ell} = \text{diag}\left\{ \text{var}\left\{ \hat{d}_{k,\ell}^{(j)} \right\} \right\} \quad \forall k,j : \mathbf{a}_k^{(j)} \in \mathcal{A}_{\ell,ass}. \quad (8)$$

Otherwise, an overall uncertainty $\sigma_d^2$ is used, i.e.

$$\mathbf{R}_\ell = \sigma_d^2 \mathbf{I}_{|\mathcal{A}_{\ell,\text{max}}|}. \tag{9}$$

*Position-Related Information and its Estimation*

In publication (1), the Cramèr Rao Lower Bound (CRLB) for positioning based on the signal model (1) and the Vas was derived. With the assumption of no path overlap, i.e. the MPCs are orthogonal, the equivalent Fisher information matrix (EFIM) for position $\mathbf{p}_\ell$ [11] is given as

$$\mathbf{J}_{\mathbf{p}_\ell} = \sum_{j=1}^{J} \sum_{k=1}^{K_\ell^{(j)}} \mathbf{J}_r(d_{k,\ell}^{(j)}) \mathbf{J}_r(\phi_{k,\ell}^{(j)}). \tag{10}$$

where the ranging direction matrix $\mathbf{J}_r\left(\phi_{k,\ell}^{(j)}\right)$ determines the direction of the information of the *k*-th MPC, since it is spanned by the outer product of the unit vector pointing from the *k*-th VA at $\boldsymbol{a}_k^{(j)}$ to the agent at $p_\ell$ with itself (cf. publication (1)). It is scaled by the Fisher information contained in the signal $r_\ell^{(j)}(t)$ (t) about the path length $d_{k,\ell}^{(j)}$. Its inverse is the CRLB for the variance of an unbiased range estimate $\hat{d}_{k,\ell}^{(j)}$

$$\mathbf{J}_r^{-1}(d_{k,\ell}^{(j)}) = \left(\frac{8\pi^2\beta^2}{c^2}\text{SINR}_{k,\ell}^{(j)}\right)^{-1} \leq \text{var}\left\{\hat{d}_{k,\ell}^{(j)}\right\}. \tag{11}$$

Here, β denotes the effective (root mean square) bandwidth of s(t) and the signal-to-interference-and-noise-ratio (SINR) of the *k*-th MPC at $\mathbf{p}_\ell$ is defined as

$$\text{SINR}_{k,\ell}^{(j)} = \frac{|\alpha_{k,\ell}^{(j)}|^2}{N_0 + T_p S_{\nu,\ell}^{(j)}(\tau_{k,\ell}^{(j)})}. \tag{12}$$

In publication (3), an estimator was derived for the average $\text{SINR}_k^{(j)}$, averaged over positions within a confined spatial region, in which propagation characteristics such as the PDP of the DM are assumed to be stationary. However, there is only a limited number of MPCs visible within such a region. To increase this number (i.e. the number of MPCs for which information can be obtained), measurements at *Ns* sets of points $\{p_\ell \ell \in \mathcal{P}_i\}$ are used, where $\mathcal{P}_i$, *i* = 1, ..., > $N_s$, collects the indices of the points. Within each set, propagation characteristics are again assumed to be stationary and a $\widehat{\text{SINR}}_k^{(j,i)}$ can be estimated. For this, the *observability* of the corresponding VA within each $\mathcal{P}_i$ must be taken into account. For this, the subsets

$$\mathcal{P}_k^{(j,i)} = \{\ell \in \mathcal{P}_i : f_{\text{vis}}(\mathbf{p}_\ell, \mathbf{a}_k^{(j)}) = 1 \wedge \tag{13}$$

$$|r_{k,\ell}^{(j)} - \tau_{k',\ell}^{(j)}| > T_{\text{p}} \; \forall \; k \neq k', \; \mathbf{a}_k^{(j)} \in \mathcal{A}_\ell^{(j)}\}$$

with cardinality $N_k^{(j,i)}$ are defined. The conditions in (13) imply that the $k$-th VA is visible at $\mathbf{p}_\ell$ and that there is no overlap with any other VA-modeled MPC.

The overall aim is to take into account the uncertainty of the MPCs in an environment, both w.r.t. the path length estimation and also w.r.t. the position of the VAs, as these are subject to floor plan uncertainties. For the estimation of a *global* range uncertainty of a specific MPC, which is necessary to be useful as a location-independent noise model (8), we propose the weighted mean of the local uncertainties

$$\widehat{\text{var}}\left\{\hat{d}_k^{(j)}\right\} = \frac{1}{\sum_{i=1}^{N_*} N_k^{(j,i)}} \sum_{i=1}^{N_*} N_k^{(j,i)} \widehat{\text{var}}\left\{\hat{d}_{k,\ell}^{(j)} : \ell \in \mathcal{P}_k^{(j,i)}\right\}. \tag{14}$$

The $\widehat{\text{var}}\left\{\hat{d}_{k,\ell}^{(j)}\right\}$ is obtained from a SINR estimate and equation (11). This and the use of equation (14) are motivated by assuming the range estimates $\hat{d}_{k,\ell}^{(j)}$ to be Gaussian distributed, which is justified by the fact that equation (4) is an approximation for the according ML estimator and as such is asymptotically efficient, i.e.

$$\hat{d}_{k,\ell}^{(j)} \sim \mathcal{N}\left(d_{k,\ell}^{(j)}; J_r^{-1}(d_{k,\ell}^{(j)})\right).$$

The VA positions are corrected using a prior $p(\tilde{\mathbf{a}}_k^{(j)})$ for the position of the $k$-th VA. This leads to the MAP estimate

$$\hat{\mathbf{a}}_k^{(j)} = \arg\max_{\tilde{\mathbf{a}}_k^{(j)}} \ln p(\mathbf{r}^{(j)}(t)|\tilde{\mathbf{a}}_k^{(j)}) + \ln p(\tilde{\mathbf{a}}_k^{(j)}) \tag{15}$$

with a likelihood function that evaluates the contribution of the $k$-th VA to all estimation signals $\mathbf{r}^{(j)}(t)$ (c.f. publication (1) but neglecting the whitening to account for the DM)

$$\ln p(\mathbf{r}^{(j)}(t)|\tilde{\mathbf{a}}_k^{(j)}) \propto \frac{2}{N_0} \sum_{i=1}^{N_a} \sum_{\ell \in \mathcal{P}_k^{(j,i)}} \int_0^T \Re\left\{[r_\ell^{(j)}(t)]^* \tilde{s}_{k,\ell}^{(j)}(t)\right\} dt$$

$$- \frac{1}{N_0} \int_0^T |\tilde{s}_{k,\ell}^{(j)}(t)|^2 dt. \tag{16}$$

Here, $\tilde{s}_{k,\ell}^{(j)}(t) = \tilde{\alpha}_{k,\ell}^{(j)} s(t - \tilde{\tau}_{k,\ell}^{(j)})$ is a template signal where $\tilde{\tau}_{k,\ell}^{(j)} = \frac{1}{c} \left\| \tilde{a}_k^{(j)} - p_\ell \right\|$ and the MPC amplitudes are again nuisance parameters and estimated using (5). The vector of received signals for the estimation is given as

$$\mathbf{r}^{(j)}(t) = [r_{\ell \in \mathcal{P}_1}^{(j)}(t), \ldots, r_{\ell \in \mathcal{P}_{N_a}}^{(j)}(t)]^T. \tag{17}$$

With the signal model in (1) and $m_{1,k}^{(j,i)}$ and $m_{2,k}^{(j,i)}$ denoting estimates of the first and second central moments of the energy samples $\left|\tilde{\alpha}_{k,\ell}^{(j)}\right|^2$ for $\ell \in \mathcal{P}_k^{(j,i)}$, the corresponding average SINRs are estimated as [4]

$$\widehat{\mathrm{SINR}}_k^{(j,i)} = \left( \frac{m_{1,k}^{(j,i)}}{\sqrt{m_{1,k}^{(j,i)^2} - m_{2,k}^{(j,i)}}} - 1 \right)^{-1}, \tag{18}$$

which can be used together with (11) and (14) to obtain a range uncertainty for the *k*-th VA for the given environment.
The SINR estimation described in [4] also performs a correction of deterministic factors such as distance-dependent path-loss. Overall, it leads to sets $\tilde{\mathcal{A}}^{(j)}$ of VAs with lower cardinality than $\mathcal{A}^{(j)}$, consisting of re-estimated VA locations obtained in (15).

EXEMPLARY MEASUREMENT SCENARIO

Measurements were obtained along a trajectory of 220 points, spaced by 5 cm, as shown in Fig. 1. Around each point, 25 measurements were performed within a 5 x 5 cm grid, yielding in fact 25 parallel trajectories for the performance analysis.
As also described in P. Meissner, E. Leitinger, M. Lafer, and K. Witrisal, "Real-Time Demonstration System for Multipath-Assisted Indoor Navigation and Tracking (MINT)," in IEEE ICC 2014 Workshop on Advances in Network Localization and Navigation (ANLN), Sydney, Australia, 2014, the channel between the agent 110 on the trajectory and two anchors 121, 122 (see Fig. 1) was measured with an M-sequence based UWB channel sounder developed by *Ilmsens.* On anchor and agent side, dipole-like antennas made of Euro-cent coins were used. They have an approximately uniform radiation pattern in azimuth plane and zeroes in the direction of floor and ceiling. Out of the measured frequency range of 3.1 - 10.6GHz, a subband with center frequency $f_c$ and bandwidth $B = 1/T_p$ was selected using filtering with a raised-cosine pulse $s(t)e^{j2\pi f_c t}$ with pulse duration $T_p$, followed by a downconversion.
For the tracking along the 25 trajectories in Fig. 1, a frequency range corresponding to $f_c$ = 7GHz and $T_p$ = 0.5 ns was chosen, which results in a bandwidth of 2GHz. The process noise variance in the motion model (6) is selected as in publication (2) based on a given maximum velocity in e.g. the x-direction $v_{x,max}$, which is chosen as the 3σ point of the noise in velocity domain. The corresponding process noise variance in the acceleration domain is then

$$\sigma_a^2 = \left(v_{x,max}/(3\Delta T)\right)^2$$ with $v_{x,max}$ = 1 m/s and T = 1 s in this example. The DA cutoff distance was chosen as $d_c$ = 0.12m. VAs up to order two were used, and SINR estimation was done using $N_s$ = 3 sets of 20 points (Fig. 1). The prior for the VA positions in (15) was chosen as a uniform distribution within a circle of diameter 10 cm around the calculated VA position. The performance of the EKF is compared for the cases with estimated SINRs (8), and where no such information is available (9). To allow for a fair comparison in the latter case, the overall ranging uncertainty is selected as the mean of the estimated uncertainties, which is $\sigma_d$ = 0.042m.

An exemplary tracking result is illustrated in Fig. 1. In this case, the EKF can track the agent with and without estimated MPC SINRs, also in the NLOS region with respect to Anchor 1 (caused by the concrete pillar on the left side of the room). At every 12-th position, the 20-fold estimation error covariance ellipse 116, 117 of the EKF is illustrated. The comparison with the estimated CRLB 118, given as the inverse of (10), shows a close match to the tracking performance when using the SINRs, which confirms the efficient use of the MPCs. It should be noted that the CRLB shown does not include the motion model, i.e. it is not the posterior CRLB. However, for the chosen process noise variance, which is deliberately larger than the measurement uncertainties, the motion prior does not add significant information, making (10) applicable.

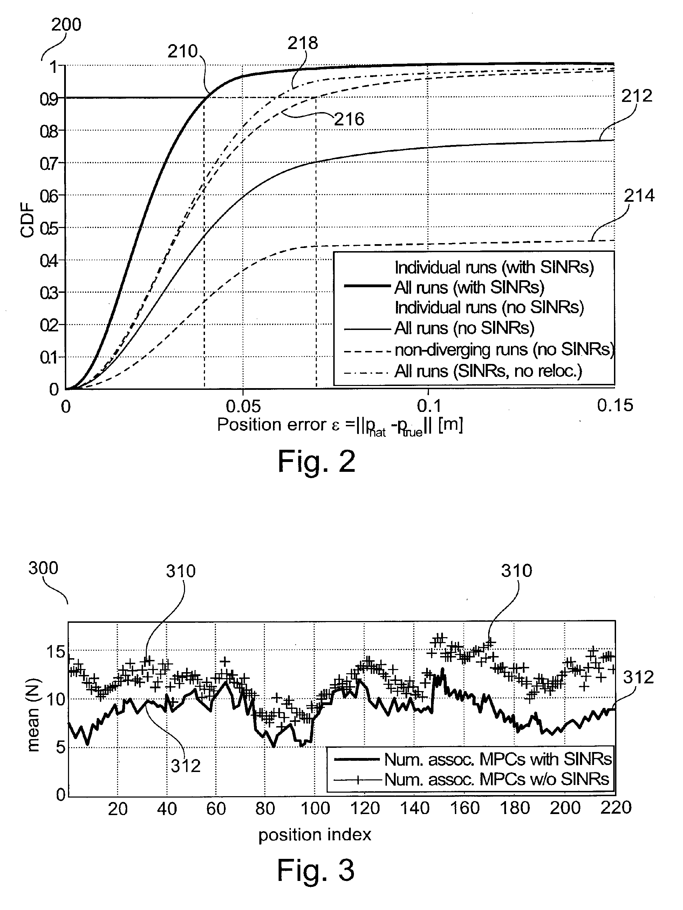

Figure 2 shows a performance comparison between localization in accordance with an embodiment of the present invention and a prior art localization approach.

More specifically, Fig. 2 shows a plot 200 of the CDFs (cumulative distribution functions) of the position errors. It is evident that the channel characterization (upper curves 210) yields excellent robustness, as all 25 runs have similar performance with 90% of the errors below 4 cm. Without SINR information (curves 212 and 214), the robustness is affected, as 10 of 25 runs diverge, mostly in the NLOS discussed before. The overall CDF for the 15 non-diverging runs (dashed curve 216) shows the potential performance of MINT without channel information, where 90% of the errors are within 7 cm. The influence of the MAP-re-localization of the VA positions in (15) is illustrated by the CDF indicated by the dash-dotted curve 218. All runs are included, SINRs used, but without the re-localized VA positions. SINR awareness provides the robustness, while the re-localization further improves accuracy.

Figure 3 shows a further performance comparison between localization in accordance with an embodiment of the present invention and a prior art localization approach.

More specifically, Fig. 3 illustrates a plot 300 of the mean number of associated MPCs, $\mathbb{E}\{|\mathcal{A}_{\ell,ass}|\}$, over all runs using SINRs (upper curve 310) and the 15 non-diverging runs without SINRs (lower curve 312), together with the respective standard deviation. The additional channel knowledge helps to substantially prune the set of potential VAs to the relevant ones. This leads to less erroneous associations of estimated MPCs to VAs and also reduces the computational complexity.

The inventors have shown that channel knowledge quantifying the position-related information of deterministic MPCs is a key factor for obtaining accurate and robust indoor localization. By estimating the uncertainty of range estimates corresponding to deterministic MPCs and making this information available to a tracking filter, multipath propagation can be used efficiently. Experimental results have confirmed the advantage, demonstrating excellent performance.

Summarizing the above, the present invention relies on the fact that deterministic reflections of the radio signal carry important position-related information. With the help of prior knowledge such as a floor plan, this information can be exploited for indoor localization. The present invention presents the improvement of a multipath-assisted tracking approach using information about the relevance of deterministic multipath components in an environment. This information is fed to a tracking filter as observation noise model. It may be estimated from a few training signals between anchors and an agent at known positions. Tracking results are presented for measurements in a partial non-line-of-sight environment. At a bandwidth of 2 GHz, an accuracy of 4 cm can be achieved for over 90% of the positions if additional channel information is available. Otherwise, this accuracy is only possible for about 45% of the positions. Also, the covariance of the estimation matches closely to the corresponding Cramèr-Rao Lower Bound.

In the above exemplary embodiment, the path length uncertainties are estimated from pre-stored measurement data obtained during an initial training phase at the locations 151, 152, 153 in Figure 1.

However, the path length uncertainties may in a similar manner be estimated from measurement data obtained during actual tracking, i.e. based on online-data.

In a corresponding embodiment of the invention, the re-localization of the VAs is performed within the Bayesian state space estimator, e.g. the extended Kalman filter. This is achieved by adding the VA coordinates to the state space, in which they are treated as constants, superimposed with noise. At each position of the trajectory, the VAs for which there are associated measurements can be updated using e.g. a linearization of the measurement model (7) with respect to the VA coordinates. In this embodiment of the invention, this implements the steps in equations (15) and (16).

The path length uncertainties are estimated using equations (18) and (11). The statistics of the path amplitudes that are necessary for this are taken from the last N positions on the trajectory, using the estimated positions of the tracking filter. The number of positions N has to be chosen such that in the corresponding spatial region, propagation characteristics can again be assumed stationary.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

**Claims**

1. A method of determining a position of a mobile agent in an indoor environment, wherein one or more fixed anchors are arranged at predetermined positions within the indoor environment, the method comprising
transmitting an RF signal from a fixed anchor to the mobile agent or from the mobile agent to the fixed anchor,
receiving the RF signal transmitted by the fixed anchor at the mobile agent or the RF signal transmitted by the mobile agent at the fixed anchor,
based on the received RF signal, estimating a plurality of path lengths corresponding to the lengths of a plurality of paths along which the RF signal has traveled between the fixed anchor and the mobile agent,
obtaining an uncertainty for each of the estimated path lengths,
generating a set of weighted path lengths based on the estimated path lengths and the corresponding uncertainties for each of the estimated path lengths, and
determining the position of the mobile agent based on the weighted path lengths and a set of data representative of a relation between positions within the indoor environment and path lengths.

2. The method according to the preceding claim, wherein the step of obtaining the uncertainty for each of the estimated path lengths comprises estimating an uncertainty for each of the estimated path lengths based on a pre-stored set of uncertainty data.

3. The method according to any of the preceding claims, wherein the pre-stored set of uncertainty data is obtained by measuring a set of uncertainties at a plurality of predetermined positions within the indoor environment.

4. The method according to any of the preceding claims, wherein the step of obtaining the uncertainty for each of the estimated path lengths comprises estimating an uncertainty for each of the estimated path lengths based on the received RF signal.

5. The method according to any of the preceding claims, wherein the step of generating the set of weighted path lengths comprises weighting each estimated path length with a weighting factor which is related to the uncertainty for the estimated path length.

6. The method according to any of the preceding claims, wherein the step of determining the position of the device comprises applying a Bayesian tracking algorithm, in particular an extended Kalman filter algorithm, to the weighted path lengths.

7. The method according to any of the preceding claims, wherein the step of estimating the plurality of path lengths comprises applying an estimation algorithm, in particular a maximum-likelihood estimation algorithm, to the received RF signal.

8. A mobile agent capable of determining its position in an indoor environment, wherein one or more fixed anchors are arranged at predetermined positions within the indoor environment, the mobile agent comprising
a unit for receiving an RF signal transmitted by one of the transmitters,
a unit for, based on the received RF signal, estimating a plurality of path lengths corresponding to the lengths of a plurality of paths along which the RF signal has traveled from the transmitter to the receiver,
a unit for obtaining an uncertainty for each of the estimated path lengths,
a unit for generating a set of weighted path lengths based on the estimated path lengths and the corresponding uncertainties for each of the estimated path lengths, and
a unit for determining the position of the mobile agent based on the weighted path lengths and a set of data representative of a relation between positions within the indoor environment and path lengths.

9. An indoor localization system, the system comprising

one or more fixed anchors arranged at predetermined positions within an indoor environment,
a mobile agent adapted to receive an RF signal transmitted by one of the fixed anchors or to transmit an RF signal to one of the fixed anchors,
wherein the one or more fixed anchors are adapted to transmit an RF signal to the mobile agent or to receive an RF signal from the mobile agent,
an estimating unit for, based on the received RF signal, estimating a plurality of path lengths corresponding to the lengths of a plurality of paths along which the RF signal has traveled between the fixed anchor and the mobile agent,
an obtaining unit for obtaining an uncertainty for each of the estimated path lengths,
a generating unit for generating a set of weighted path lengths based on the estimated path lengths and the corresponding uncertainties for each of the estimated path lengths, and
a determining unit for determining the position of the mobile agent based on the weighted path lengths and a set of data representative of a relation between positions within the indoor environment and path lengths.

10. The system according to the preceding claim, wherein the mobile agent comprises the estimating unit, the obtaining unit, the generating unit, and the determining unit.

11. The system according to claim 9, further comprising a server, wherein the server, the at least one fixed anchor and the mobile agent are adapted to be in data communication, and wherein the server comprises at least one of the estimating unit, the obtaining unit, the generating unit, and the determining unit, while the mobile agent comprises those of the estimating unit, the obtaining unit, the generating unit, and the determining unit that are not comprised by the server.

12. A computer program comprising computer executable instructions which, when executed by a computer, causes the computer to perform the method according to any of claims 1 to 7.

13. A computer program product comprising a computer readable data carrier loaded with the program according to the preceding claim.

**Amended claims in accordance with Rule 137(2) EPC.**

1. A method of determining a position of a mobile agent (110) in an indoor environment (100), wherein one or more fixed anchors (121, 122) are arranged at predetermined positions within the indoor environment (100), the method comprising
transmitting an RF signal from a fixed anchor to the mobile agent or from the mobile agent to the fixed anchor,
receiving the RF signal transmitted by the fixed anchor at the mobile agent or the RF signal transmitted by the mobile agent at the fixed anchor,
based on the received RF signal, estimating a plurality of path lengths corresponding to the lengths of a plurality of paths (131, 132; 135, 136) along which the RF signal has traveled between the fixed anchor and the mobile agent,
wherein at least one of the plurality of paths is a non-direct path between mobile agent and fixed anchor involving at least one reflection from a surface (140, 141, 151, 152, 153) within the indoor environment,
obtaining an uncertainty for each of the estimated path lengths,
generating a set of weighted path lengths based on the estimated path lengths and the corresponding uncertainties for each of the estimated path lengths, and
determining the position of the mobile agent based on the weighted path lengths and a set of data representative of a relation between positions within the indoor environment and path lengths.

2. The method according to the preceding claim, wherein the step of obtaining the uncertainty for each of the estimated path lengths comprises estimating an uncertainty for each of the estimated path lengths based on a pre-stored set of uncertainty data.

3. The method according to the preceding claim, wherein the pre-stored set of uncertainty data is obtained by measuring a set of uncertainties at a plurality of predetermined positions within the indoor environment.

4. The method according to any of the preceding claims, wherein the step of obtaining the uncertainty for each of the estimated path lengths comprises estimating an uncertainty for each of the estimated path lengths based on the received RF signal.

5. The method according to any of the preceding claims, wherein the step of generating the set of weighted path lengths comprises weighting each estimated path length with a weighting factor which is related to the uncertainty for the estimated path length.

6. The method according to any of the preceding claims, wherein the step of determining the position of the device comprises applying a Bayesian tracking algorithm, in particular an extended Kalman filter algorithm, to the weighted path lengths.

7. The method according to any of the preceding claims, wherein the step of estimating the plurality of path lengths comprises applying an estimation algorithm, in particular a maximum-likelihood estimation algorithm, to the received RF signal.

8. A mobile agent (110) capable of determining its position in an indoor environment (100), wherein one or more fixed anchors (121, 122) are arranged at predetermined positions within the indoor environment, the mobile agent comprising
   a unit for receiving an RF signal transmitted by one of the transmitters,
   a unit for, based on the received RF signal, estimating a plurality of path lengths corresponding to the lengths of a plurality of paths (131, 132; 135, 136) along which the RF signal has traveled from the transmitter to the receiver, wherein at least one of the plurality of paths is a non-direct path between mobile agent and fixed anchor involving at least one reflection from a surface (140, 141, 151, 152, 153) within the indoor environment,
   a unit for obtaining an uncertainty for each of the estimated path lengths,
   a unit for generating a set of weighted path lengths based on the estimated path lengths and the corresponding uncertainties for each of the estimated path lengths, and
   a unit for determining the position of the mobile agent based on the weighted path lengths and a set of data representative of a relation between positions within the indoor environment and path lengths.

9. An indoor localization system, the system comprising
   one or more fixed anchors (121, 122) arranged at predetermined positions within an indoor environment (100),
   a mobile agent (110) adapted to receive an RF signal transmitted by one of the fixed anchors or to transmit an RF signal to one of the fixed anchors,
   wherein the one or more fixed anchors are adapted to transmit an RF signal to the mobile agent or to receive an RF signal from the mobile agent,
   an estimating unit for, based on the received RF signal, estimating a plurality of path lengths corresponding to the lengths of a plurality of paths (131, 132; 135, 136) along which the RF signal has traveled between the fixed anchor and the mobile agent, wherein at least one of the plurality of paths is a non-direct path between mobile agent and fixed anchor involving at least one reflection from a surface (140, 141, 151, 152, 153) within the indoor environment,
   an obtaining unit for obtaining an uncertainty for each of the estimated path lengths,
   a generating unit for generating a set of weighted path lengths based on the estimated path lengths and the corresponding uncertainties for each of the estimated path lengths, and
   a determining unit for determining the position of the mobile agent based on the weighted path lengths and a set of data representative of a relation between positions within the indoor environment and path lengths.

10. The system according to the preceding claim, wherein the mobile agent comprises the estimating unit, the obtaining unit, the generating unit, and the determining unit.

11. The system according to claim 9, further comprising a server, wherein the server, the at least one fixed anchor and the mobile agent are adapted to be in data communication, and wherein the server comprises at least one of the estimating unit, the obtaining unit, the generating unit, and the determining unit, while the mobile agent comprises those of the estimating unit, the obtaining unit, the generating unit, and the determining unit that are not comprised by the server.

12. A computer program comprising computer executable instructions which, when executed by a computer, causes the computer to perform the method according to any of claims 1 to 7.

13. A computer program product comprising a computer readable data carrier loaded with the program according to the preceding claim.

Fig. 1

Fig. 2

Fig. 3

Europäisches
Patentamt

European
Patent Office

Office européen
des brevets

## EUROPEAN SEARCH REPORT

Application Number

EP 14 17 1612

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 149 162 B1 (PAULS RICHARD J [US]) 3 April 2012 (2012-04-03) | 1-5,8-13 | INV. G01S5/02 |
| Y | * column 1, line 39 - column 2, line 6 * <br> * column 4, lines 4-15 * <br> * column 8, line 10 - column 10, line 56 * <br> * column 10, line 64 - column 11, line 15 * <br><br> * column 11, lines 21-37 * <br> * column 11, lines 52-62 * <br> ----- | 6,7 | G01S5/14 <br> G01S11/06 <br> G01S11/08 |
| X | US 2013/045750 A1 (KIM SEONG CHEOL [KR] ET AL) 21 February 2013 (2013-02-21) <br> * paragraphs [0012] - [0016] * <br> * paragraphs [0018] - [0030] * <br> * paragraphs [0032], [0036], [0037] * <br> * paragraphs [0053], [0062], [0079] * <br> * paragraphs [0062] - [0066] * <br> * paragraphs [0081] - [0083] * <br> ----- | 1-5,8-13 | |
| Y | WO 2012/065233 A1 (COMMW SCIENT IND RES ORG [AU]; SATHYAN THURAIAPPAH [AU]; HEDLEY MARK []) 24 May 2012 (2012-05-24) <br> * page 2 - page 4 * <br> * page 6 - page 7 * <br> * page 15 - page 17 * <br> ----- | 6 | TECHNICAL FIELDS SEARCHED (IPC) <br><br> G01S |
| Y | US 2009/091497 A1 (KIM JAE-HO [KR] ET AL) 9 April 2009 (2009-04-09) <br> * paragraphs [0009] - [0012] * <br> * paragraphs [0020] - [0023] * <br> * paragraph [0033] * <br> * paragraphs [0039] - [0044] * <br> ----- | 7 | |

The present search report has been drawn up for all claims

| Place of search | Date of completion of the search | Examiner |
|---|---|---|
| The Hague | 18 November 2014 | Naddeo, Giovanni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 14 17 1612

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2014

| Patent document cited in search report | | Publication date | Patent family member(s) | | Publication date |
|---|---|---|---|---|---|
| US 8149162 | B1 | 03-04-2012 | NONE | | |
| US 2013045750 | A1 | 21-02-2013 | KR 20130020295 A<br>US 2013045750 A1 | | 27-02-2013<br>21-02-2013 |
| WO 2012065233 | A1 | 24-05-2012 | AU 2012203094 A1<br>WO 2012065233 A1 | | 13-06-2013<br>24-05-2012 |
| US 2009091497 | A1 | 09-04-2009 | KR 20090035824 A<br>US 2009091497 A1 | | 13-04-2009<br>09-04-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. WITRISAL ; P. MEISSNER.** Performance Bounds for Multipath-aided Indoor Navigation and Tracking (MINT). *International Conference on Communications (ICC),* 2012
- **P. MEISSNER ; E. LEITINGER ; M. FROEHLE ; K. WITRISAL.** Accurate and Robust Indoor Localization Systems Using Ultra-wideband Signals. *European Navigation Conference (ENC),* 2013, http://arxiv.org/abs/1304.7928
- **P. MEISSNER ; K. WITRISAL.** Analysis of Position-Related Information in Measured UWB Indoor Channels. *6th European Conference on Antennas and Propagation (EuCAP),* 2012
- **P. MEISSNER ; E. LEITINGER ; M. LAFER ; K. WITRISAL.** Real-Time Demonstration System for Multipath-Assisted Indoor Navigation and Tracking (MINT). *IEEE ICC 2014 Workshop on Advances in Network Localization and Navigation (ANLN),* 2014
- **K.WITRISAL ; E. LEITINGER ; P. MEISSNER ; D. ARNITZ.** Cognitive Radar for the Localization of RFID Transponders in Dense Multipath Environments. *IEEE Radar Conference,* April 2013
- **E. LEITINGER ; M. FROEHLE ; P. MEISSNER ; K. WITRISAL.** Multipath-Assisted Maximum-Likelihood Indoor Positioning using UWB Signals. *IEEE ICC 2014 Workshop on Advances in Network Localization and Navigation (ANLN),* 10 June 2014
- **D. DARDARI ; A. CONTI ; U. FERNER ; A. GIORGETTI ; M. Z. WIN.** Ranging With Ultrawide Bandwidth Signals in Multipath Environments. *Proceedings of the IEEE,* 2009
- **N. DECARLI ; F. GUIDI ; D. DARDARI.** A Novel Joint RFID and Radar Sensor Network for Passive Localization: Design and Performance Bounds. *IEEE Journal of Selected Topics in Signal Processing,* 2014
- **Y. SHEN ; S. MAZUELAS ; M. WIN.** Network Navigation: Theory and Interpretation. *IEEE Journal on Selected Areas in Communications,* 2012
- **A. CONTI ; D. DARDARI ; M. GUERRA ; L. MUCCHI ; M. WIN.** Experimental Characterization of Diversity Navigation. *IEEE Systems Journal,* 2014
- **J. KUNISCH ; J. PAMP.** An ultra-wideband space-variant multipath indoor radio channel model. *IEEE Conference on Ultra Wideband Systems and Technologies,* 2003
- **D. SCHUHMACHER ; B.-T. VO ; B.-N. VO.** A Consistent Metric for Performance Evaluation of Multi-Object Filters. *IEEE Transactions on Signal Processing,* 2008